# EUROPÄISCHE PATENTSCHRIFT

(11) **EP 0 784 554 B1**
(45) Veröffentlichungstag und Bekanntmachung des Hinweises auf die Patenterteilung: **10.03.1999**
(21) Anmeldenummer: 95925851.8
(22) Anmeldetag: 08.07.1995
(51) Int. Cl.: B60T 8/94, B60T 8/42, B60T 8/48

(54) **SCHLUPFGEREGELTE HYDRAULISCHE BREMSANLAGE**
ABS HYDRAULIC BRAKE SYSTEM
SYSTEME DE FREINAGE HYDRAULIQUE A ANTIBLOCAGE

(43) Veröffentlichungstag der Anmeldung: 23.07.1997
(73) Patentinhaber: Continental Teves AG & Co. oHG, 60488 Frankfurt (DE)
(72) Erfinder: NATTLER, Gerlinde, D-60385 Frankfurt am Main (DE); VOLZ, Peter, D-64291 Darmstadt (DE)
(86) Internationale Anmeldenummer: EP9502671
(87) Internationale Veröffentlichungsnummer: WO9702973

(56) Entgegenhaltungen:
- EP-A- 0 485 367
- WO-A-91/18776
- WO-A-93/21047
- DE-A- 4 213 205
- GB-A- 2 192 683
- GB-A- 2 197 402
- GB-A- 2 230 578
- US-A- 5 364 176

## Beschreibung

Die vorliegende Erfindung betrifft eine schlupfgeregelte hydraulische Bremsanlage gemäß dem Oberbegriff des Anspruchs 1.

Schlupfgeregelte Bremsanlagen, die nach dem Rückförderprinzip arbeiten, bilden während einer Blockierschutzregelung ein geschlossenes System, wie z.B. in der DE 37 28 480 A1. Das heißt, daß die Bremsflüssigkeitsmenge, die zu einer solchen Blockierschutzregelung zur Verfügung steht, begrenzt ist. Damit diese begrenzte Druckmittelmenge zur Bremsschlupfregelung ausreicht, muß bei einer Bremspedalbetätigung durch den Hauptzylinder ein entsprechend großes Volumen in die Bremskreise befördert werden. Wenn bei einem Defekt durch Leckage während einer Blockierschutzregelung Druckmittel verlorengeht, kann bei geschlossenen Systemen dieses Volumen nicht aus dem Vorratsbehälter nachgesaugt werden.

Die Aufgabe der vorliegenden Erfindung ist es, eine blockiergeschützte Bremsanlage, welche nach dem Rückförderprinzip arbeitet, zu schaffen, die auch bei einer Leckage während der Blockierschutzregelung zuverlässig arbeitet.

Diese Aufgabe wird gelöst mit einer gattungsgemäßen Bremsanlage, welche die kennzeichnenden Merkmale des Anspruchs 1 aufweist.

Eine Bremsanlage nach dem Oberbegriff des Anspruches 1 ist beispielsweise aus der WO 91/18776 bekannt. Der Reservespeicher der bekannten Bremsanlage dient aber lediglich dazu, ein zusätzliches Volumen zur Antriebsschlupfregelung bereitzustellen. Ein Schaltventil in der Pumpenspeiseleitung soll daher nur bei einer Antriebsschlupfregelung öffnen.

Gemäß der vorliegenden Erfindung weist eine gattungsgemäße Bremsanlage zusätzlich einen Sensor auf, der das Fördervolumen des Hauptzylinders erfaßt. Erfindungsgemäß ist der Reservespeicher mittels des Schaltventils mit der Saugleitung hydraulisch verbindbar, sobald der Sensor signalisiert, daß das Fördervolumen des Hauptzylinders nahezu erschöpft ist. Dadurch kann das Volumen des Reservespeichers immer dann zur Verfügung gestellt werden, wenn das Volumen des Hauptzylinders erschöpft ist und ein weiterer Druckaufbau erwünscht ist. Wenn also aufgrund einer Leckage das zur Schlupfregelung zur Verfügung stehende Druckmittelvolumen geringer wird und das Bremspedal entsprechend tief durchgetreten wird, ist die Pumpenspeiseleitung bedingt durch ein entsprechendes Sensorsignal geöffnet, so daß das Reservespeichervolumen zur Saugseite der Pumpe gelangt, von welcher es in die Bremskreise gefördert wird. Aufgrund des hohen Pumpendruckes kann dann eine Bremsdruckregelung erfolgen, die von den Einlaß- und Auslaßventilen gesteuert wird.

Zweckmäßigerweise kann der Sensor als Wegsensor ausgebildet werden, so daß die Notwendigkeit einer Zuschaltung des Reservespeichers von einem Wegsensor angezeigt wird, der am Bremspedal, am Bremskraftverstärker oder am Hauptzylinder angebracht ist.

Ein Trennventil in der Bremsleitung zwischen dem Hauptzylinder und der Einmündung der Druckleitung kann zu verschiedenen Zwecken verwendet werden. Es kann während einer Bremsung, zu welcher der Reservespeicher zugeschaltet wird, den Hauptzylinder vom Bremskreis abtrennen, so daß das Pedalgefühl für den Fahrer unbeeinträchtigt bleibt. Auch zu einer Antriebsschlupfregelung oder zur Ladung des Reservespeichers - wie unten näher beschrieben - kann ein solches Trennventil verwendet werden.

Der Reservespeicher kann dadurch geladen werden, daß eine Speicherladeleistung zwischen Hauptzylinder und Trennventil von der Bremsleitung abzweigt und das Trennventil während einer Pedalbetätigung geschlossen bleibt. Dann wird das Hauptzylindervolumen nicht in die Bremskreise, sondern über die Speicherladeleitung in den Reservespeicher befördert.

Eine weitere Möglichkeit zum Laden des Speichers besteht darin, daß eine Speicherladeleitung unterhalb des Trennventils von der Bremsleitung bzw. von der Druckleitung der Pumpe abzweigt. In diesem Falle sind Ladezyklen vorgesehen, in denen das Trennventil geschlossen wird und die Pumpe Druckmittel, welche sie aus dem Vorratsbehälter angesaugt hat, über die Druckleitung und die Speicherladeleitung in den Reservespeicher verbringt.

Für den Fall, daß in der Bremsleitung kein Trennventil vorgesehen ist und die Speicherladeleitung von der Druckleitung der Pumpe abzweigt, kann zwischen der Abzweigung der Speicherladeleitung und der Einmündung der Druckleitung in die Bremsleitung eine Drosselstelle vorgesehen sein, welche ein Druckgefälle zwischen der Druckleitung und der Bremsleitung herstellt, so daß der entstehende Staudruck zur Befüllung des Reservespeichers genutzt werden kann. Zum Aufbau des nötigen Staudrucks kann aber auch, falls vorhanden, das Trennventil geschlossen werden.

Wenn der Reservespeicher von der Pumpe gefüllt werden soll, gibt es verschiedene Möglichkeiten, die Pumpe an den Vorratsbehälter anzuschließen. Die einfachste Möglichkeit wäre ein direkter Anschluß an den Vorratsbehälter. Hierdurch entstünde aber ein offenes System, bei welchem die Druckmittelmenge ohnehin nicht begrenzt ist, so daß ein Hilfsdruckspeicher überflüssig ist. Die Nachteile von offenen Systemen sollen mit der Erfindung gerade vermieden werden. Deshalb bietet sich an, zur Befüllung des Reservespeichers beispielsweise das Auslaßventil in der Rücklaufleitung und das Einlaßventil in der Bremsleitung zu öffnen, so daß die Pumpe über die Rücklaufleitung und die Bremsleitung sowie den Hauptzylinder an den Vorratsbehälter angeschlossen ist. Diese Möglichkeit ist für Bremsanlagen ohne Trennventil geeignet. Eine andere Möglichkeit besteht darin, die Pumpenspeiseleitung statt mit nur einem mit zwei Schaltventilen auszurüsten, zwischen denen eine Zuführleitung abzweigt. Diese kann beispielsweise an die Bremsleitung zwischen Hauptzylinder und Trennventil anschließen. Bei unbetätigtem Hauptzylinder steht die Bremsleitung oberhalb des Trennventils direkt mit dem Vorratsbehälter in Verbindung, so daß die Pumpe ungehindert ansaugen kann. Bei betätigtem Hauptzylinder bleibt trotzdem ein geschlossenes System bestehen.

Eine weitere Variante zur Ladung des Reservespeichers besteht darin, eine Speicherladeleitung zur Saugleitung zu legen, wobei in diese Speicherladeleitung ein Rückschlagventil eingefügt ist, welches in Speicherfüllrichtung öffnet. Dann kann der Reservespeicher entweder dadurch geladen werden, daß das Auslaßventil in der Rücklaufleitung geöffnet wird und eine Pedalbetätigung erfolgt oder daß bei Beendigung einer Bremsschlupfbzw. Antriebsschlupfregelung das frei werdende Druckmittel in den Reservespeicher gelangt.

Eine nähere Erläuterung der Erfindung erfolgt nun durch die Beschreibung von vier Ausführungsbeispielen anhand von Zeichnungen.

Es zeigt:
- Fig. 1: eine erfindungsgemäße Bremsanlage, deren Speicherladeleitung von der Bremsleitung zwischen Hauptzylinder und Trennventil abzweigt.
- Fig. 2: eine erfindungsgemäße Bremsanlage bei welcher die Speicherladeleitung von der Druckleitung abzweigt,
- Fig. 3: eine erfindungsgemäße Bremsanlage, deren Speicherladeleitung von der Druckleitung abzweigt und die eine zusätzliche Nachlaufleitung vom Hauptzylinder zur Saugseite der Pumpe aufweist und
- Fig. 4: eine erfindungsgemäße Bremsanlage, deren Speicherladeleitung an die Saugleitung angeschlossen ist.

In allen Fig. tragen gleiche Funktionselemente dieselben Bezugszeichen. Der Übersichtlichkeit halber ist in jeder Fig. nur ein Bremskreis dargestellt und in diesem auch nur eine Radbremse. Die bei einem vierrädrigen Fahrzeug vorgesehene zweite Radbremse pro Bremskreis schließt sich in bekannter Weise an den Bremskreis an, wobei der zweite Bremskreis analog zum ersten Bremskreis aufgebaut ist.

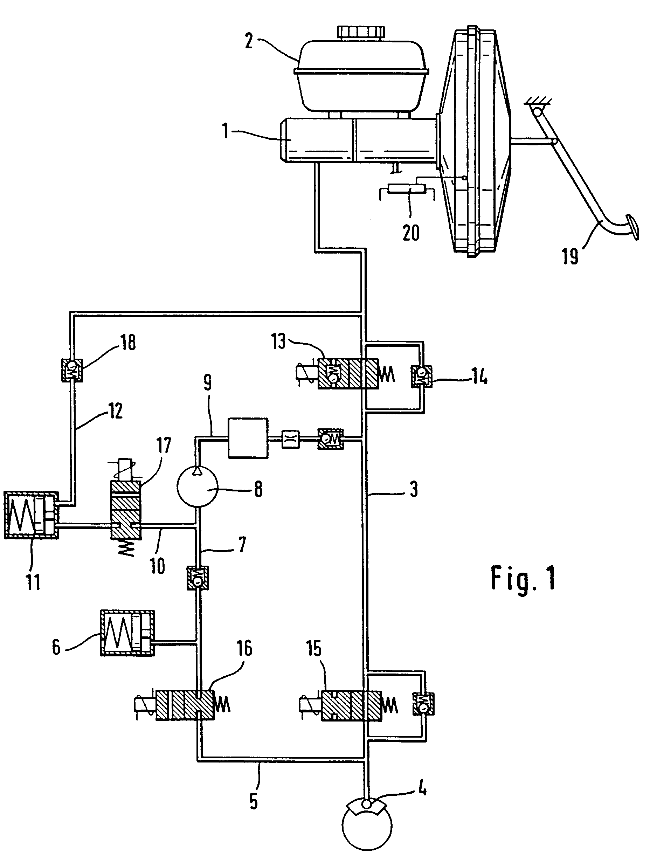

Die hydraulische Schaltung nach Fig. 1 ähnelt in ihrem Aufbau der aus dem Stand der Technik (WO 91-18776) bekannten Schaltung. Der Hauptzylinder 1 ist auf bekannte Weise an den Vorratsbehälter 2 angeschlossen, vom Hauptzylinder 1 verläuft die Bremsleitung 3 zur Radbremse 4. Von der Radbremse 4 führt die Rücklaufleitung 5 zum Niederdruckspeicher 6. der Niederdruckspeicher 6 ist über die Saugleitung 7 mit der Saugseite der Pumpe 8 verbunden, deren Druckleitung 9 in die Bremsleitung 3 einmündet. An die Saugleitung 7 ist die Pumpenspeiseleitung 10 angeschlossen, die den Reservespeicher 11 mit der Saugseite der Pumpe 8 verbindet. Eine Speicherladeleitung 12 zweigt von der Bremsleitung 3 unmittelbar unterhalb des Hauptzylinders 1 ab und führt zum Reservespeicher 11. Zwischen der Abzweigung der Speicherladeleitung 12 und der Einmündung der Druckleitung 9 ist die Bremsleitung 3 mit einem Trennventil 13 versehen. Das Trennventil 13 ist ein elektromagnetisch betätigtes, stromlos geöffnetes 2/2-Wegeventil, das bei bestromten Elektromagneten ein Überdruckventil in die Bremsleitung 3 schaltet, welches zum Hauptzylinder 1 hin bei einem Vordruck öffnet, welcher beispielsweise zu einer Antriebsschlupfregelung in der Radbremse 4 ausreicht. Das Überdruckventil kann selbstverständlich auch separat parallel zum Trennventil 13 angelegt sein, wobei dann das Trennventil 13 in seiner Schaltstellung die Bremsleitung 3 sperrt. Um bei geschaltetem Trennventil 13 ein Einbremsen vom Hauptzylinder 1 zur Radbremse 4 zu ermöglichen, ist dem Trennventil 13 weiterhin ein Rückschlagventil 14 parallelgeschaltet.

Zwischen der Einmündung der Druckleitung 9 und der Radbremse 4 ist in der Bremsleitung 3 das Einlaßventil 15 angeordnet. Dieses ist ein stromlos offenes Magnetventil, welchem ein Rückschlagventil parallelgeschaltet ist, das von der Radbremse 4 zum Hauptzylinder 1 hin öffnet. In die Rücklaufleitung 5 ist ein Auslaßventil 16 eingefügt, ein stromlos geschlossenes Magnetventil. Die Pumpenspeiseleitung 10 ist über ein ebenfalls stromlos geschlossenes 2/2-Wegemagnetventil, das Schaltventil 17 sperrbar. Damit der Reservespeicher 11 sich bei unbetätigtem Hauptzylinder 1 nicht in den Vorratsbehälter 2 entleeren kann, weist die Speicherladeleitung 12 ein Rückschlagventil 18 auf, welches vom Hauptzylinder 1 zum Reservespeicher 11 hin öffnet.

Der Hauptzylinder 1 wird zum Druckaufbau in der Bremsleitung 3 vom Bremspedal 19 betätigt. Ein Wegsensor 20 erfaßt den zurückgelegten Pedalweg. Dieser Wegsensor 20 kann beispielsweise mit dem Arbeitskolben eines Vakuumverstärkers wie dargestellt gekoppelt sein.

Für die dargestellte Bremsanlage ergibt sich folgende Funktionsweise:

Bei Betätigung des Bremspedals 19 wird die Verbindung des Hauptzylinders 1 zum Vorratsbehälter 2 getrennt und Druckmittel aus den Arbeitskammern des Hauptzylinders 1 in die zugehörigen Bremskreise verbracht. Über die Bremsleitung 3 wird in der Radbremse 4 ein Bremsdruck aufgebaut. Für den Fall, daß das Hauptzylindervolumen nahezu erschöpft ist, obwohl ein weiterer Bremsdruckaufbau erwünscht wird, signalisiert der Wegsensor 20 aufgrund der weit vorgefahrenen Position des Bremspedals 19, daß ein zusätzliches Druckmittelvolumen benötigt wird. Das Trennventil 13 wird geschlossen, und das Schaltventil 17 wird geöffnet, so daß das Volumen des Reservespeichers 11 zur Saugseite der Pumpe 8 gelangt, welche zugleich mit der Umschaltung der Ventile 13 und 17 zu laufen beginnt. Die Pumpe 8 befördert das Reservevolumen in die Bremsleitung 3 von welcher es in die Radbremse 4 gelangt. Da der Pumpendruck in der Regel höher liegt als der nötige Bremsdruck, erfolgt eine weitere Bremsdruckregelung durch die an sich bekannte Schaltung des Einlaßventils 15 und des Auslaßventils 16. Die Bremsanlage arbeitet dann wie eine bekannte blockiergeschützte Bremsanlage nach dem Rückförderprinzip.

Damit bei einer späteren Bremsung der Reservespeicher 11 erneut Druckmittel zur Verfügung stellen kann, muß er zwischenzeitlich nachgeladen werden. Aller Wahrscheinlichkeit nach erfolgen nach einer Vollbremsung zunächst mehrere leichte Bremsungen, bevor zum nächsten Mal das Reservevolumen benötigt wird. Bei solchen leichteren Bremsbetätigungen, bei welchem das Hauptzylindervolumen nicht ausgeschöpft wird, gelangt über das Rückschlagventil 18 jeweils eine Teilmenge des aus dem Hauptzylinder 1 verdrängten Druckmittels in den Reservespeicher 11, aus welchem es nicht entweichen kann, solange das Schaltventil 17 geschlossen ist.

Zum Nachladen des Reservespeichers kann auch ein optisches Signal vorgesehen sein, das dem Fahrzeuglenker eine Betätigung des Bremspedals empfiehlt. Dabei kann eine Schließung des Trennventils möglicherweise manuell ausgelöst werden.

Der Reservespeicher 11 kann bei dieser Bremsanlage selbstverständlich auch zu den aus dem Stand der Technik bekannten Zwecken zur Antriebsschlupfregelung herangezogen werden. Wenn die Pumpe 8 als selbstansaugende Pumpe ausgelegt ist, kann sie zusätzlich weiteres Druckmittelvolumen über das des Reservespeichers hinaus ansaugen, da während einer Antriebsschlupfregelung das Trennventil 13 in seiner Schaltstellung ist und der Hauptzylinder 1 eine freie Verbindung zum Vorratsbehälter 2 besitzt. Die Speicherladeleitung 12 dient dann als Ansaugleitung zur Antriebsschlupfregelung.

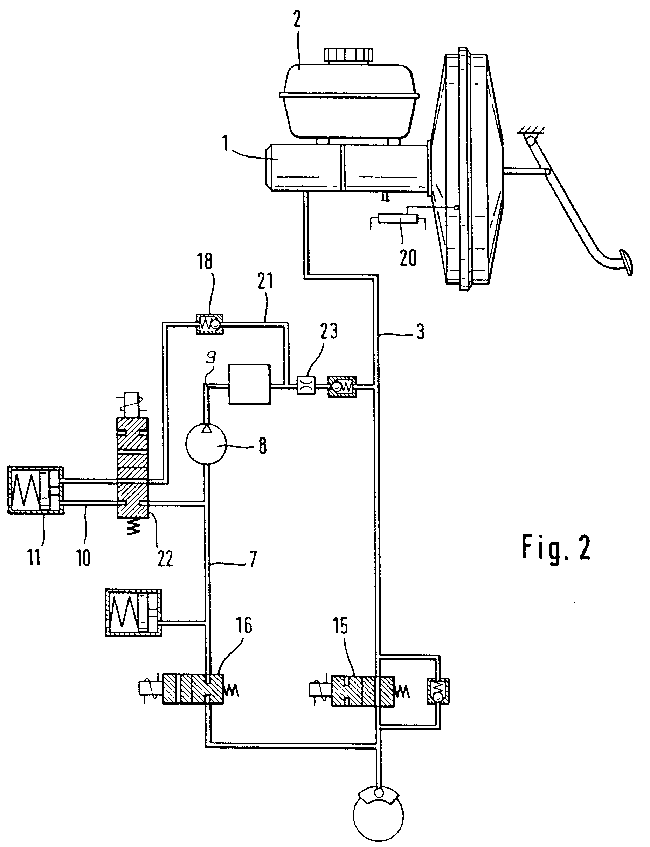

Die Bremsanlage nach Fig. 2 unterscheidet sich von der nach Fig. 1 im wesentlichen dadurch, wie der Reservespeicher 11 geladen wird. Die Speicherladeleitung 21 zweigt von der Druckleitung 9 ab und führt über das als 4/2-Wegeventil gestaltete Schaltventil 22 zum Reserveschalter 11. Die Befüllung des Reservespeichers 11 erfolgt hier nicht durch Pedalbetätigung, sondern über die Pumpe 8. Dazu wird das Auslaßventil 16 in seine Durchlaßstellung geschaltet, so daß die Pumpe 8 durch die Saugleitung 7, über das Auslaßventil 16 und das Einlaßventil 15 durch die Bremsleitung 3 und den Hauptzylinder 1 aus dem Vorratsbehälter 2 Druckmittel ansaugen und in den Reservespeicher 11 befördern kann. Hierzu ist das Schaltventil 22, welches entweder die Pumpenspeiseleitung 10 oder die Speicherladeleitung 21 sperrt, in seiner Grundstellung, welche die Pumpenspeiseleitung 10 sperrt. So kann die Pumpe 8 beim Befüllen des Reservespeichers 11 nicht im Kreis fördern und dabei den Reservespeicher 11 wieder leeren. Da in der Bremsleitung 3 kein Trennventil vorgesehen ist, zweigt die Speicherladeleitung 21 von der Druckleitung 9 zwischen der Druckseite der Pumpe und einer Drosselstelle 23 ab, welche den erforderlichen Staudruck erzeugt, damit das von der Pumpe geförderte Druckmittelvolumen nicht gleich wieder in den Hauptzylinder 1 abfließt. Der maximale Fülldruck des Reservespeichers 11 ist also durch den Förderdruck der Pumpe 8, den Staudruck der Drosselstelle 23 sowie den Vordruck des Rückschlagventils 18 bestimmt.

Wenn der Wegsensor 20 anzeigt, daß das Volumen des Reservespeichers 11 zur Schlupfregelung benötigt wird, schaltet das Schaltventil 22 um, so daß der Reservespeicher 11 nunmehr über die Pumpenspeiseleitung 10 mit der Saugseite der Pumpe 8 verbunden ist. Die Verbindung der Druckleitung 9 zum Reservespeicher 11 wird zugleich unterbrochen. Die Pumpe 8 fördert also das Volumen des Reservespeichers 11 nur noch in die Bremsleitung 3. Die weitere Funktionsweise der Bremsanlage ergibt sich aus der vorherigen Beschreibung von Fig. 1 sowie aus dem Stand der Technik.

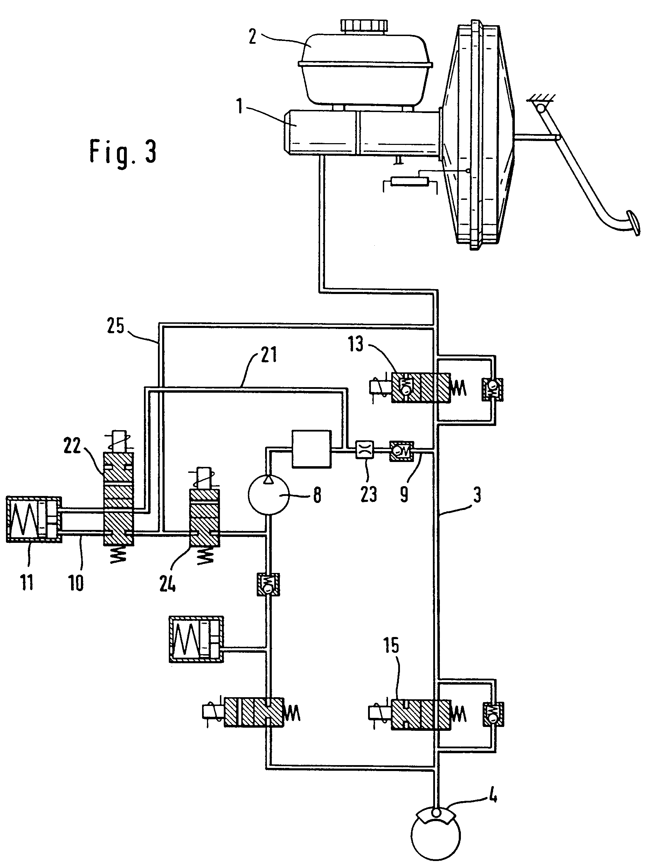

In Fig. 3 ist eine Bremsanlage dargestellt, deren Reservespeicher 11 wie in Fig. 2 von der Pumpe 8 aufgefüllt wird. Der Druckmittelweg, über welchen die Pumpe 8 das Druckmittel aus dem Vorratsbehälter 2 ansaugt, ist jedoch hier ein anderer. Die Pumpenspeiseleitung 10 weist zwischen dem Schaltventil 22, welches schon in Fig. 2 Verwendung findet, ein weiteres Schaltventil 24 auf, welches zwischen dem ersten Schaltventil 22 und der Saugseite der Pumpe 8 angeordnet ist. Das Schaltventil 24 ist ein elektromagnetisch betätigtes 2/2-Wegeventil welches in seiner stromlosen Stellung geschlossen ist. Zwischen den beiden Schaltventilen 22 und 24 zweigt eine Zuführleitung 25 von der Pumpenspeiseleitung 10 ab und führt zur Bremsleitung 3 unmittelbar unterhalb des Hauptzylinders 1. Zwischen der Anknüpfung der Zuführleitung 25 und der Einmündung der Druckleitung 9 ist in die Bremsleitung 3 hier wiederum ein Trennventil 13 eingefügt. Wenn der Reservespeicher 11 nachgefüllt werden muß, wird dieses Trennventil 13 in seine Sperrstellung umgeschaltet, während das zweite Schaltventil 24 geöffnet wird. Das erste Schaltventil 22 verbleibt in seiner dargestellten Grundstellung, so daß die Speicherladeleitung 21 die Druckseite der Pumpe 8 mit dem Reservespeicher 11 verbindet, während die Saugseite der Pumpe lediglich mit der Zuführleitung 25, nicht aber mit dem Reservespeicher 11 verbunden ist. Die Pumpe 8 saugt nun über das geöffnete Schaltventil 24, die Zuführleitung 25 und den Hauptzylinder 1 Druckmittel aus dem Vorratsbehälter 2 an und fördert es in die Speicherladeleitung 21. Das geschlossene Trennventil 13, dessen integriertes Überdruckventil erst bei einem Überdruck öffnet, der höher liegt als der erforderliche Fülldruck des Reservespeichers 11, verhindert ein Abströmen von Druckmittel in den Hauptzylinder 1. Damit das von der Pumpe 8 geförderte Druckmittel nicht in die Radbremse 4 gelangt, kann entweder das Einlaßventil 15 geschlossen werden oder aber die Drosselstelle 23 wieder so ausgelegt werden, daß der Staudruck zur Befüllung des Reservespeichers 11 ausreicht. Daß die dargestellte Bremsanlage auf an sich bekannte Weise auch zur Antriebsschlupfregelung herangezogen werden kann, liegt auf der Hand.

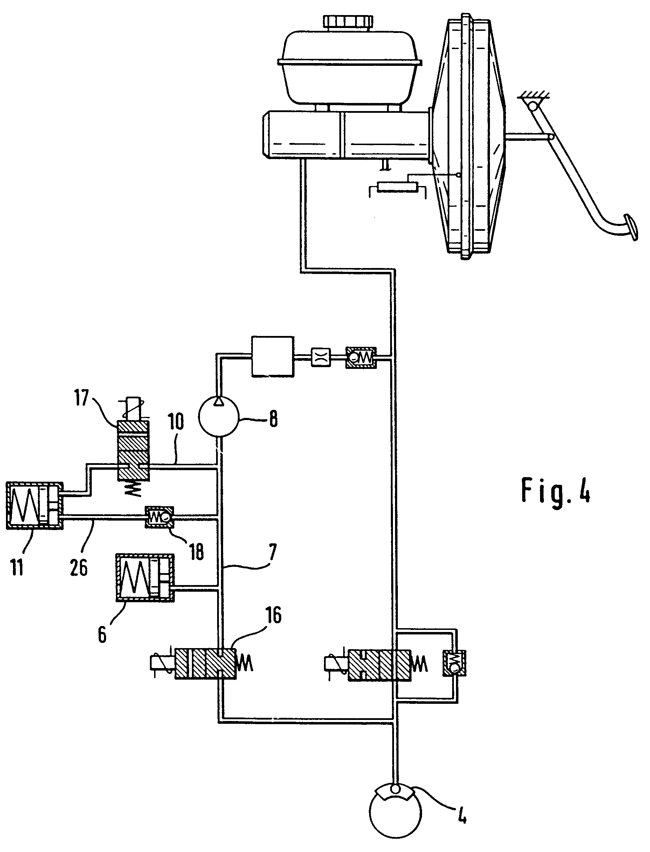

Eine weitere Variante, wie der Reservespeicher 11 aufgefüllt werden kann, zeigt Fig. 4. Die Speicherladeleitung 26 ist hier parallel zur Pumpenspeiseleitung 10 angelegt. Sie knüpft also an die Saugleitung 7 zwischen Saugseite der Pumpe 8 und dem Auslaßventil 16 an. Durch diese Anordnung wird eine automatische Befüllung des Reservespeichers 11 ermöglicht. Bei Beendigung einer schlupfgeregelten Bremsung, wenn also das Auslaßventil 16 zum Druckabbau geöffnet wird und das Volumen des Niederdruckspeichers 6 nicht mehr für eine weitere Schlupfregelung zur Verfügung stehen muß, wird die Pumpe 8 unverzüglich abgeschaltet, so daß das Volumen des Niederdruckspeichers 6 sowie das über das Auslaßventil 16 aus der Padbremse 4 entweichende Druckmittel über das in der Speicherladeleitung 12 angeordnete Rückschlagventil 18 in den Reservespeicher 11 gelangt. Das Schaltventil 17 verbleibt in seiner geschlossenen Stellung, so daß das Druckmittel aus dem Reservespeicher 11 nicht entweichen kann, bis es benötigt wird.

### Bezugszeichenliste

- 1: Hauptzylinder
- 2: Vorratsbehälter
- 3: Bremsleitung
- 4: Radbremse
- 5: Rücklaufleitung
- 6: Niederdruckspeicher
- 7: Saugleitung
- 8: Pumpe
- 9: Druckleitung
- 10: Pumpenspeiseleitung
- 11: Reservespeicher
- 12: Speicherladeleitung
- 13: Trennventil
- 14: Rückschlagventil
- 15: Einlaßventil
- 16: Auslaßventil
- 17: Schaltventil
- 18: Rückschlagventil
- 19: Bremspedal
- 20: Wegsensor
- 21: Speicherladeleitung
- 22: Schaltventil
- 23: Drosselstelle
- 24: Schaltventil
- 25: Zuführleitung
- 26: Speicherladeleitung

## Patentansprüche

1. Schlupfgeregelte hydraulische Bremsanlage mit einem von einem Vorratsbehälter (2) gespeisten, pedalbetätigten Hauptzylinder (1), mit mindestens einer Radbremse (4), mit einer Bremsleitung (3) vom Hauptzylinder (1) zur Radbremse (4), mit einem Niederdruckspeicher (6), mit einer Rücklaufleitung (5) von der Radbremse (4) zum Niederdruckspeicher (6), mit einer Pumpe (8), deren Saugseite über eine Saugleitung (7) mit dem Niederdruckspeicher (6) und deren Druckseite über eine Druckleitung (9) mit der Bremsleitung (3) in Verbindung steht, mit einem Einlaßventil (15) in der Bremsleitung (3) und einem Auslaßventil (16) in der Rücklaufleitung (5), mit einem Reservespeicher (11), der über eine Pumpenspeiseleitung (10) an die Saugleitung (7) angeschlossen ist, sowie mit zumindest einem normal geschlossenen Schaltventil (17, 22, 24) in der Pumpenspeiseleitung (10), dadurch **gekennzeichnet**, daß die Bremsanlage einen Sensor (20) aufweist, der das Fördervolumen des Hauptzylinders (1) erfaßt, und daß der Reservespeicher (11) mittels des Schaltventils (17, 22, 24) mit der Saugleitung (7) hydraulisch verbindbar ist, wenn der Sensor (20) signalisiert, daß das Fördervolumen des Hauptzylinders (1) nahezu erschöpft ist.

2. Bremsanlage nach Anspruch 1, dadurch **gekennzeichnet**, daß der Sensor ein Wegsensor (20) ist.

3. Bremsanlage nach Anspruch 1 oder 2, dadurch **gekennzeichnet**, daß in der Bremsleitung (3) zwischen Hauptzylinder (1) und Einmündung der Druckleitung (9) ein Trennventil (13) angeordnet ist.

4. Bremsanlage nach Anspruch 3, dadurch **gekennzeichnet**, daß der Reservespeicher (11) über eine Speicherladeleitung (12) an die Bremsleitung (3) zwischen Hauptzylinder (1) und Trennventil (13) angeschlossen ist.

5. Bremsanlage nach Anspruch 1 oder 2, dadurch **gekennzeichnet**, daß der Reservespeicher (11) über eine Speicherladeleitung (21) an die Druckleitung (9) angeschlossen ist, wobei Mittel (13, 23) vorgesehen sind, die bei laufender Pumpe (8) und unbetätigtem Hauptzylinder (1) ein Druckgefälle zwischen Pumpe (8) und Hauptzylinder (1) erzeugen.

6. Bremsanlage nach Anspruch 5, dadurch **gekennzeichnet**, daß die Mittel (13, 23) eine Drosselstelle (23) in der Druckleitung (9) umfassen.

7. Bremsanlage nach Anspruch 5, dadurch **gekennzeichnet**, daß die Mittel (13, 23) ein Trennventil (13) in der Bremsleitung (3) umfassen.

8. Bremsanlage nach einem der vorhergehenden Ansprüche, dadurch **gekennzeichnet**, daß die Pumpenspeiseleitung (10) zwei Schaltventile (22,24) aufweist, zwischen denen eine Zuführleitung (25) abzweigt, die zumindest bei unbetätigtem Hauptzylinder (1) mit dem Vorratsbehälter (2) in Verbindung steht.

9. Bremsanlage nach einem der Ansprüche 1 bis 3, dadurch **gekennzeichnet**, daß eine Speicherladeleitung (26) von der Saugleitung (7) abzweigt und mit einem zum Reservespeicher (11) hin öffnenden Rückschlagventil (18) versehen ist.

## Claims

1. Slip-controlled hydraulic brake system which includes a pedal-operated master cylinder (1) fed by a supply reservoir (2), at least one wheel brake (4), a brake line (3) leading from the master cylinder (1) to the wheel brake (4), a low-pressure accumulator (6), a return line (5) from the wheel brake (4) to the low-pressure accumulator (6), a pump (8) having its suction side connected to the low-pressure accumulator (6) by way of a suction line (7) and its pressure side connected to the brake line (3) by way of a pressure line (9), an inlet valve (15) in the brake line (3) and an outlet valve (16) in the return line (5), a reserve accumulator (11) which is connected to the suction line (7) by way of a pump supply line (10) and at least one normally closed switch valve (17, 22, 24) in the pump supply line (10),
**characterized** in that the brake system includes a sensor (20) which senses the supply volume of the master cylinder (1), and in that the reserve accumulator (11) is hydraulically connectable to the suction line (7) by way of the switch valve (17, 22, 24) when the sensor (20) signals that the supply volume of the master cylinder (1) is almost exhausted.

2. Brake system as claimed in claim 1,
**characterized** in that the sensor is a travel sensor (20).

3. Brake system as claimed in claim 1 or claim 2,
**characterized** in that a separating valve (13) is arranged in the brake line (3) between the master cylinder (1) and the mouth of the pressure line (9).

4. Brake system as claimed in claim 3,
**characterized** in that the reserve accumulator (11) is connected to the brake line (3) between the master cylinder (1) and the separating valve (13) by way of an accumulator charging line (12).

5. Brake system as claimed in claim 1 or claim 2,
**characterized** in that the reserve accumulator (11), by way of an accumulator charging line (21), is connected to the pressure line (9)), wherein means (13, 23) are provided to produce a pressure gradient between the pump (8) and the master cylinder (1) when the pump (8) is running and the master cylinder (1) is not actuated.

6. Brake system as claimed in claim 5,
**characterized** in that the means (13, 23) comprise a throttle (23) in the pressure line (9).

7. Brake system as claimed in claim 5,
**characterized** in that the means (13, 23) comprise a separating valve (13) in the brake line (3).

8. Brake system as claimed in any one of the preceding claims,
**characterized** in that the pump supply line (10) includes two switch valves (22, 24) inbetween which a feed line (25) branches off which is connected to the supply reservoir (2), at least when the master cylinder (1) is not actuated.

9. Brake system as claimed in any one of claims 1 to 3,
**characterized** in that an accumulator charging line (26) branches from the suction line (7) and is provided with a non-return valve (18) which opens towards the reserve accumulator (11).

## Revendications

1. Système hydraulique de freinage à régulation du glissement, comprenant un maître-cylindre (1), actionné par pédale et alimente par un réservoir (2), au moins un frein de roue (4), une conduite de frein (3), menant du maître-cylindre (1) au frein de roue (4), un accumulateur basse pression (6), une conduite de retour (5), menant du frein de roue (4) à l'accumulateur basse pression (6), une pompe (8), dont le côte aspiration communique avec l'accumulateur basse pression (6) par une conduite d'aspiration (7) et dont le côté refoulement communique avec la conduite de frein (3) par une conduite de refoulement (9), une valve d'entrée (15) disposée dans la conduite de £rein (3) et une valve de sortie (16) disposée dans la conduite de retour (5), un accumulateur de réserve (11), qui est raccordé à la conduite d'aspiration (7) par une conduite d'alimentation de pompe (10), et au moins une valve de commutation normalement fermée (17, 22, 24) disposée dans la conduite d'alimentation de pompe (10), caractérisé en ce que le système de freinage comprend un capteur (20) qui détecte le volume que le maître-cylindre (1) peut refouler et en ce que l'accumulateur de réserve (11) peut être mis en communication hydraulique avec la conduite d'aspiration (7) au moyen de la valve de commutation (17, 22, 24) lorsque le capteur (20) signale le fait que le volume que le maître-cylindre (1) peut refouler est presque épuisé.

2. Système de freinage suivant la revendication 1, caractérisé en ce que le capteur est un détecteur de course (20).

3. Système de freinage suivant la revendication 1 ou 2, caractérisé en ce qu'une valve d'isolement (13) est disposée dans la conduite de frein (3) entre le maître-cylindre (1) et le débouché de la conduite de refoulement (9).

4. Système de freinage suivant la revendication 3, caractérisé en ce que l'accumulateur de réserve (11) est raccordé par une conduite de remplissage d'accumulateur (12) à la conduite de frein (3) entre le maître-cylindre (1) et la valve d'isolement (13).

5. Système de freinage suivant la revendication 1 ou 2, caractérisé en ce que l'accumulateur de réserve (11) est raccordé à la conduite de refoulement (9) par une conduite de remplissage d'accumulateur (21), tandis qu'il est prévu des moyens (13, 23) qui produisent une perte de charge entre la pompe (8) et le maître-cylindre (1) lorsque la pompe (8) tourne et que le maître-cylindre (1) n'est pas actionné.

6. Système de freinage suivant la revendication 5, caractérisé en ce que les moyens (13, 23) comprennent un emplacement d'étranglement (23) disposé dans la conduite de refoulement (9).

7. Système de freinage suivant la revendication 5, caractérisé en ce que les moyens (13, 23) comprennent une valve d'isolement (13) disposée dans la conduite de frein (3).

8. Système de freinage suivant l'une des revendications précédentes, caractérisé en ce que la conduite d'alimentation de pompe (10) comporte deux valves de commutation (22, 24) entre lesquelles est branchée en dérivation une conduite d'acheminement (25) qui communique avec le réservoir (2) au moins lorsque le maître-cylindre (1) n'est pas actionné.

9. Système de freinage suivant l'une des revendications 1 à 3, caractérisé en ce qu'une conduite de remplissage d'accumulateur (26) est branchée en dérivation sur la conduite d'aspiration (7) est pourvue d'une valve antiretour (18) s'ouvrant vers l'accumulateur de réserve (11).
